# EUROPÄISCHE PATENTANMELDUNG

(11) **EP 2 072 225 A1**
(43) Veröffentlichungstag der Anmeldung: **24.06.2009**
(21) Anmeldenummer: 08170352.2
(22) Anmeldetag: 01.12.2008
(51) Int. Cl.: B29C 70/48, B29C 33/02, B29C 45/73

(54) **Verfahren und Vorrichtung zur Herstellung von Faserverbundbauteilen**

(30) Priorität: 17.12.2007 DE 102007060739
(71) Anmelder: Deutsches Zentrum für Luft- und Raumfahrt e.V., 51147 Köln (DE)
(72) Erfinder: Kaps, Robert, 38108 Braunschweig (DE)
(74) Vertreter: Rehberg Hüppe + Partner

(57) **Zusammenfassung**

Zur Herstellung von Faserverbundbauteilen, wobei eine Faservorform in eine Formkavität (1) eines Formwerkzeugs (2) eingebracht wird, wobei die Formkavität (1) evakuiert wird, wobei das Formwerkzeug (2) aufgeheizt wird und wobei ein Matrixharz (5) in flüssigem Zustand in die evakuierte Formkavität (1) des aufgeheizten Formwerkzeugs (2) injiziert wird, um die Faservorform mit dem Matrixharz (5) zu infiltrieren, wird das Formwerkzeug (2) zumindest für einen Teilzeitraum während des Injizierens des Matrixharzes (5) in mindestens einem Kantenbereich (10) der Formkavität (1) auf einer niedrigeren Temperatur gehalten als das restliche Formwerkzeug.

## Beschreibung

Die Erfindung bezieht sich auf ein Verfahren zur Herstellung von Faserverbundbauteilen mit den Merkmalen des Oberbegriffs des unabhängigen Patentanspruchs 1 sowie auf ein Formwerkzeug für die Herstellung von Faserverbundbauteilen mit den Merkmalen des Oberbegriffs des unabhängigen Patentanspruchs 10.

Insbesondere betrifft die Erfindung die Herstellung hochwertiger Faserverbundbauteile beispielsweise für den Einsatz in der Luftfahrt, d. h. bei modernen Luftfahrzeugen.

Die bei der Erfindung zum Einsatz kommenden Matrixharze können grundsätzlich sowohl duroplastische als auch thermoplastische Harze sein. Meistens wird es sich bei hochwertigen Faserverbundbauteilen jedoch um duroplastische Harze handeln, d. h. solche, die nach dem Infiltrieren der Faservorform chemisch aushärten und dann durch Temperaturerhöhung nicht mehr verflüssigt werden können.

Zu den Anwendungsgebieten der vorliegenden Erfindung zählen alle so genannten Harzinjektionsverfahren (Resin Transfer Moulding = RTM), unabhängig davon, ob die Formkavität zwischen zwei starren, beispielsweise metallischen, Werkzeughälften ausgebildet wird und dadurch ein weitgehend definiertes Volumen aufweist, oder ob eine Werkzeughälfte durch eine Kunststofffolie ersetzt ist, wie dies bei so genannten Liquid Resin Infusion (LRI)-Verfahren der Fall ist.

Speziell betrifft die vorliegende Erfindung die Herstellung großflächiger Faserverbundbauteile, d. h. von Faserverbundbauteilen die eine viel größere flächige Erstreckung als eine dazu senkrechte Dicke aufweisen. Diese Beschreibung trifft jedoch auf einen Großteil der üblicherweise hergestellten Faserverbundbauteile zu.

### STAND DER TECHNIK

Aus der WO 00/30823 ist ein LRI-Verfahren bekannt, bei dem das Injizieren des Matrixharzes über einen einzigen, in einen Kantenbereich der Formkavität einmündenden Injektionskanal erfolgt. Dabei ist mit Kantenbereich ein Bereich einer Schmalfläche oder ein Bereich in der Nähe einer Schmalfläche der Formkavität gemeint, die bei einem plattenförmigen Faserverbundbauteil durch zwei Hauptflächen und umlaufende Schmalflächen begrenzt wird. Das von dem zuvor erzeugten Vakuum in die Faservorform eingesogene flüssige Matrixharz fließt bei dem als Single Line Injection (SLI) bekannten Verfahren bis in einen Spülbereich der Formkavität vor, in dem sich zwar auch ein Teil der Faservorform befindet, welcher aber nach dem Aushärten des Matrixharzes und dem Ausformen von dem eigentlichen Faserverbundbauteil abgetrennt wird. Dies hat den Vorteil, dass sich Unregelmäßigkeiten des Matrixharzes, die sich an seiner Fließfront einstellen können, wie beispielsweise Luftblasen, oder auch ein Restluftvolumen in dem Spülbereich ansammeln und so mit diesem von dem eigentlichen Faserverbundbauteil abgetrennt werden, so dass sie dessen Struktur nicht stören.

Bei allen RTM-Verfahren, einschließlich der LRI-Verfahren und somit auch des SLI-Verfahrens, besteht jedoch eine Neigung des injizierten flüssigen Matrixharzes in den Kantenbereichen der Formkavität, gegenüber dem Matrixharz in der Fläche der Formkavität deutlich vorzueilen, so dass sich ein etwaiges Restluftvolumen häufig nicht am Rand der Formkavität sondern in deren Fläche wiederfindet. Diesem Problem muss mit zusätzlichen Maßnahmen, wie beispielsweise Restluft aufnehmenden Geweben, mehreren Injektionskanälen und dgl. begegnet werden, um überhaupt flächige Faserverbundbauteile ohne vorprogrammierte Fehlstellen herstellen zu können.

Aus der EP 1 685 947 A1 ist es bekannt, durch spezielle Ausbildung der Faservorform das Vorlaufen des flüssigen Matrixharzes beim Injizieren, das im Englischen als "Racetracking" bezeichnet wird, zu unterbinden.

Die US 6,406,660 beschreibt die Herstellung von Faserverbundbauteilen mit niedrigem Volumenanteil an Verstärkungsfasern nach einem LRI-Verfahren. Hier soll dem "Racetracking" durch einen speziellen Zuschnitt der Faservorform und eine spezielle Volumengestaltung der Formkavität begegnet werden.

Aus der DE 10 2004 025 704 A1 sind ein Verfahren und eine Vorrichtung zum Herstellen von faserverstärkten Kunststoff-Bauteilen bekannt. Hier werden das Fasermaterial sowie der Flüssige Kunststoff in eine form eingebracht; und die Aushärtung des flüssigen Kunststoffs wird durch Beheizung eingeleitet oder bewirkt, wobei die in die Form eingebrachten Materialien durch ein Wärmeübertragungsfluid mit Druck beaufschlagt und beheizt werden. Das Wärmeübertragungsfluid wird durch einen Zwischenraum zwischen einer der Formkavität zugekehrten Folie und einer dieser abgekehrten Membran hindurchgeleitet, die auf ihrer der Formkavität abgekehrten Seite mit einem Druckgas beaufschlagt wird. Die Temperatur des Wärmeübertragungsfluids kann während der Harz-Eintragung und des Aushärtens zeitlich und/oder örtlich variiert werden. Zusätzlich kann der starre Teil des Formwerkzeugs beheizt oder gekühlt werden.

### AUFGABE DER ERFINDUNG

Der Erfindung liegt die Aufgabe zugrunde, ein Verfahren mit den Merkmalen des Oberbegriffs des Patentanspruchs 1 und ein Formwerkzeug mit den Merkmalen des Oberbegriffs des Patentanspruchs 11 aufzuzeigen, mit denen Faserverbundbauteile unabhängig von Kompromissen bei der Faservorform und den Abmessungen der Formkavität herstellbar sind.

### LÖSUNG

Erfindungsgemäß wird die Aufgabe durch ein Verfahren mit den Merkmalen des unabhängigen Patentanspruchs 1 und durch ein Formwerkzeug mit den Merkmalen des unabhängigen Patentanspruchs 10 gelöst. Bevorzugte Ausführungsformen des neuen Verfahrens sind in den abhängigen Patentansprüchen 2 bis 9 beschrieben. Die abhängigen Patentansprüche 11 bis 15 betreffen bevorzugte Ausführungsformen des neuen Formwerkzeugs.

### BESCHREIBUNG DER ERFINDUNG

Bei dem neuen Verfahren wird das Formwerkzeug zumindest für einen Teilzeitraum während des Injizierens des Matrixharzes in mindestens einem Kantenbereich der Formkavität auf einer niedrigeren Temperatur gehalten als das restliche Formwerkzeug. Unabhängig davon, ob es sich bei dem Matrixharz um ein thermoplastisches oder duroplastisches Harz handelt, hängt seine Viskosität beim Injizieren von seiner Temperatur ab. Je höher die Temperatur des Matrixharzes ist, desto geringer ist seine Viskosität während des Injizierens. So kann durch Einstellen einer niedrigeren Temperatur in einem Kantenbereich der Formkavität die Viskosität des Matrixharzes hier gezielt lokal herabgesetzt werden, um sein Voreilen längs dieses Kantenbereichs, das auf eine größere Porösität der Faservorfom in diesem Kantenbereich bzw. deren fehlende endseitige Abstützung an der Kantenfläche der Formkavität zurückgeht, zu kompensieren. Diese Kompensation ist höchst effektiv. So kann in dem jeweiligen Kantenbereich diese Viskosität über ein Reduzieren des Voreilens hinaus bis hinab zu einem Rückeilen des Matrixharzes reduziert werden. Auf diese Weise lässt sich der Verlauf der Fließfront des Matrixharzes über die Fläche des Faserverbundbauteils auf einfache aber doch ausgesprochen effektive Weise steuern.

Dies gilt insbesondere dann, wenn das Matrixharz in einem oder mehreren anderen Kantenbereichen als dem mindestens einem Kantenbereich, in dem das Formwerkzeug auf einer niedrigeren Temperatur gehalten wird, in die Formkavität injiziert wird. Über diesen Kantenbereich, in dem das Matrixharz in die Formkavität injiziert wird, soll es sich ohne Weiteres schnell verteilen, um dann von dort über eine breite Fließfront die Faservorform zu infiltrieren.

Konkret kann das Formwerkzeug in dem mindestens einen Kantenbereich durch Kühlen auf einer niedrigen Temperatur gehalten werden. So kann das gesamte Formwerkzeug beispielsweise in einen Autoklaven eingebracht werden, in dem es bis auf die gekühlten Bereiche auf eine homoge Temperaturverteilung aufgeheizt wird. Das Formwerkzeug kann aber auch direkt beheizt werden und dazu eine eigene Heizung aufweisen, wobei dann der mindestens eine Kantenbereich ebenfalls aktiv gekühlt oder zumindest weniger stark erwärmt wird.

Der mindestens eine Kantenbereich, in dem das Formwerkzeug auf einer niedrigen Temperatur gehalten wird, kann sich über eine Schmalfläche der Formkavität erstrecken, womit nicht zwingend eine ganze Schmalseite der Formkavität sondern nur ein Teil derselben gemeint ist. Neben oder alternativ zu einer solchen Schmalfläche kann sich der Kantenbereich auf der niedrigeren Temperatur auch über angrenzende Bereiche einer oder beider Hauptflächen der Formkavität erstrecken.

In einer konkreten Ausführungsform des neuen Verfahrens kann das Formwerkzeug in Kantenbereichen, die parallel zu einer Richtung verlaufen, in welcher das Matrixharz in die Formkavität injiziert wird, auf einer niedrigen Temperatur gehalten werden. Auf diese Weise ist es möglich, eine etwa geradlinige, sich senkrecht zu der Richtung, in der das Matrixharz in die Formkavität injiziert wird, erstreckende Fließfront des Matrixharzes beim Injizieren auszubilden.

Es erweist sich aber als ausreichend, das Formwerkzeug in mindestens einem Kantenbereich auf einer niedrigeren Temperatur zu halten, der einem in die Formkavität einmündenden Injektionskanal über die Formkavität hinweg gegenüberliegt. Dabei wird ein Voreilen des Matrixharzes längs der parallel zur Injektionsrichtung verlaufenden Kantenbereich hingenommen, aber ein Einschließen von beispielsweise Restluft in der Fläche der Formkavität verhindert, indem das voreilende Matrixharz in dem der Injektionsstelle gegenüberliegenden Kantenbereich vor seinem dortigen Zusammenlaufen aus einander entgegen gesetzten Richtungen stark abgebremst wird.

Besonders bevorzugt ist es bei dem neuen Verfahren, wenn sich der mindestens eine Kantenbereich, in dem die Formkavität auf einer niedrigen Temperatur gehalten wird, in einem Spülbereich der Formkavität befindet, dessen Anteil von den fertigen Faserverbundbauteilen entfernt wird. Dort kann sich der Kantenbereich auf den niedrigen Temperaturen bis über die Hauptflächen der Formkavität erstrecken.

In einer etwas aufwändigeren, aber aufgrund ihrer erweiterten Möglichkeiten besonders bevorzugten Ausführungsform des neuen Verfahrens wird lokal der zeitliche und/oder flächig der geometrische Verlauf der Fließfront des Matrixharzes beispielsweise mit zu der Formkavität gewandten Drucksensoren an dem Formwerkzeug erfasst und der Umfang des Kühlens in dem mindestens einen Kantenbereich zum Einregeln eines gewünschten Fließfrontverlaufs variiert und/oder jeweils nur dort gekühlt, wo sich das Matrixharz aktuell in dem mindestens einen Kantenbereich befindet, so dass hinter der Fließfront eine homogene Temperaturverteilung bis in die Kantenbereiche vorliegt, um optimale Bedingungen z. B. für das homogene Aushärten des Matrixharzes zu schaffen.

Das neue Formwerkzeug wurde indirekt bereits mit der Beschreibung des neuen Verfahrens erläutert. Bei ihm sind Temperiermittel vorgesehen, die das Formwerkzeug zumindest für einen Teilzeitraum während des Injizierens des Matrixharzes in mindestens einem Kantenbereich der Formkavität auf einer niedrigeren Temperatur halten als das restliche Formwerkzeug, wobei der mindestens eine Injektionskanal in einem anderen Kantenbereich als dem mindestens einen Kantenbereich, in dem die Temperiermittel das Formwerkzeug auf der niedrigeren Temperatur halten, in die Formkavität einmündet.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.

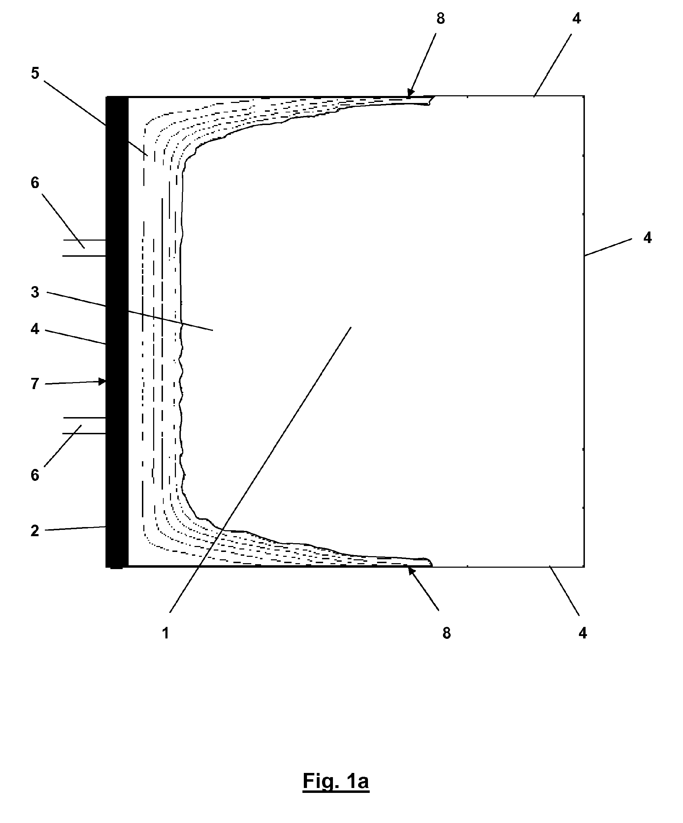

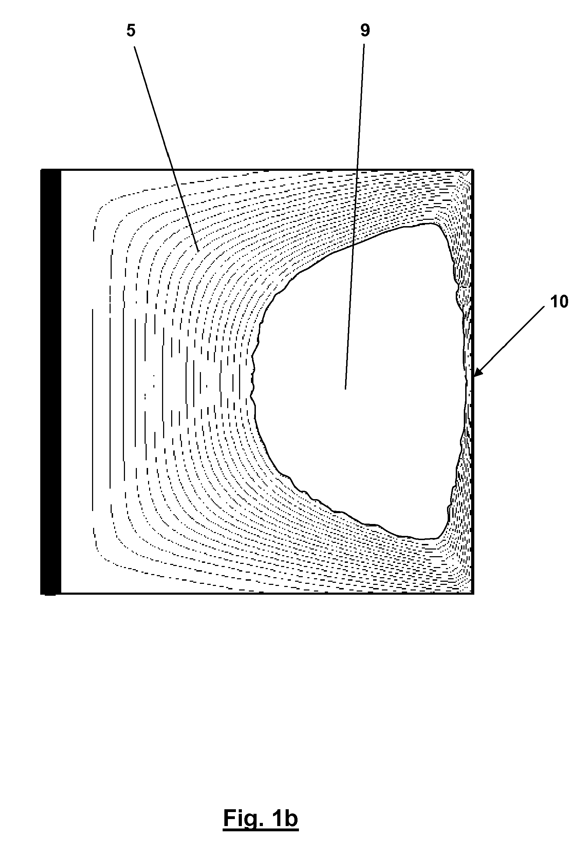

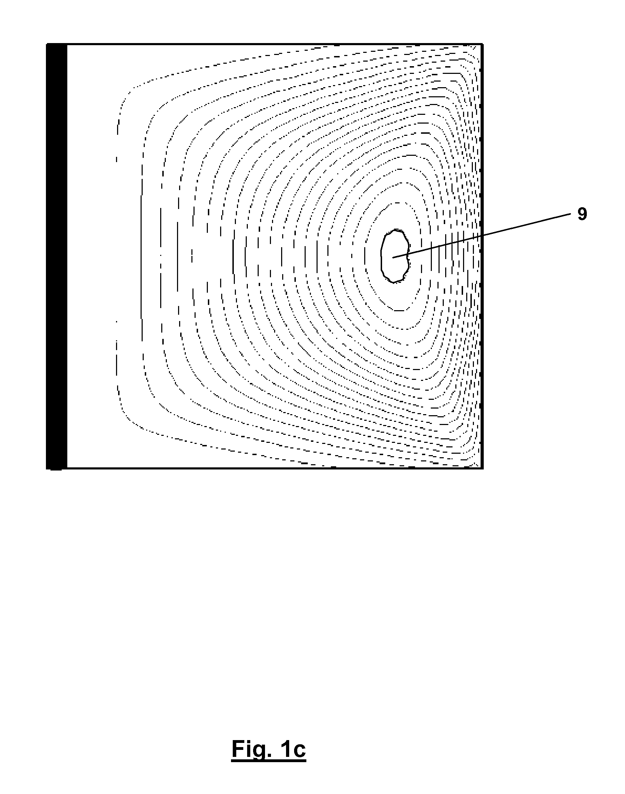

- **Fig.1**: zeigt ein Beispiel für eine Injektion von Matrixharz in eine plattenförmige Formkavität eines Formwerkzeugs ohne Einsatz erfindungsgemäßer Temperiermittel in drei verschiedenen Stadien der Injektion.

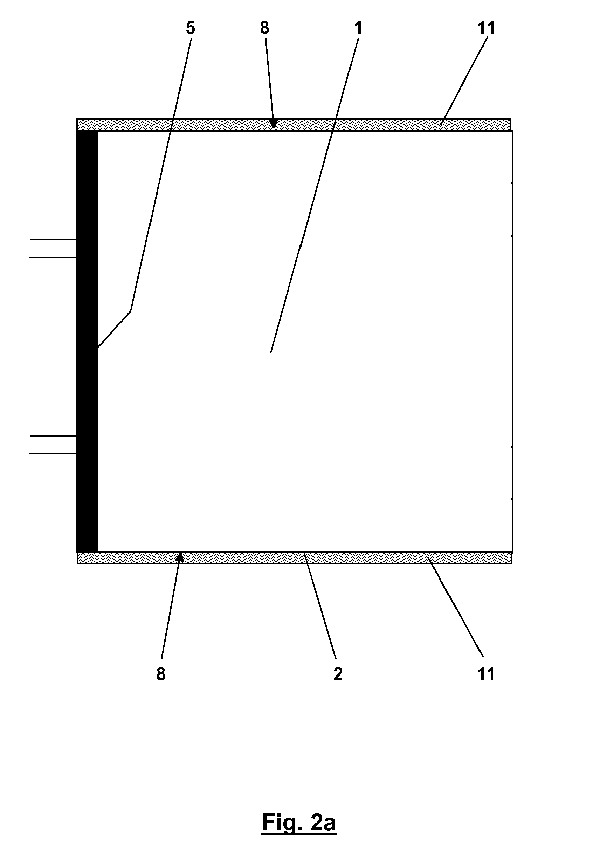

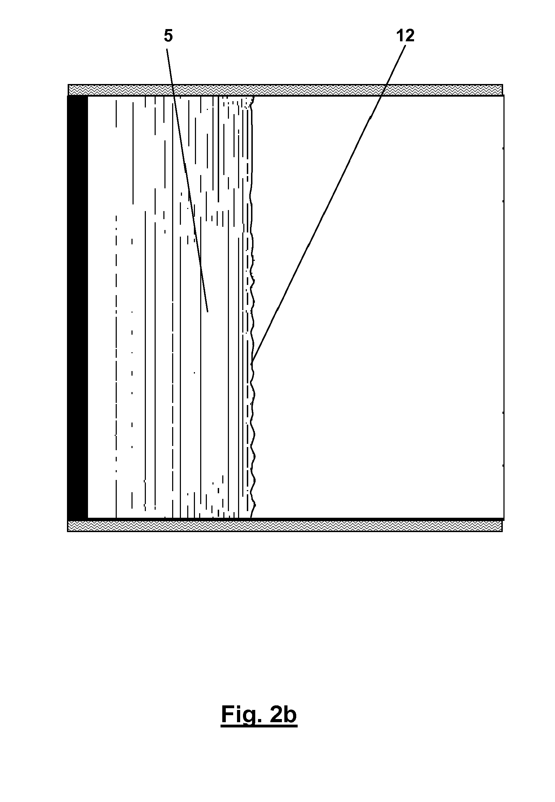

- **Fig. 2**: zeigt die Injektion von Matrixharz in die Formkavität gemäß Fig. 1, wobei hier Temperiermittel aktiviert sind, um das Formwerkzeug in Kantenbereichen, die parallel zu einer Richtung verlaufen, in welcher das Matrixharz in die Formkavität injiziert wird, auf einer niedrigeren Temperatur zu halten. Dargestellt sind zwei verschiedene Stadien der Injektion.

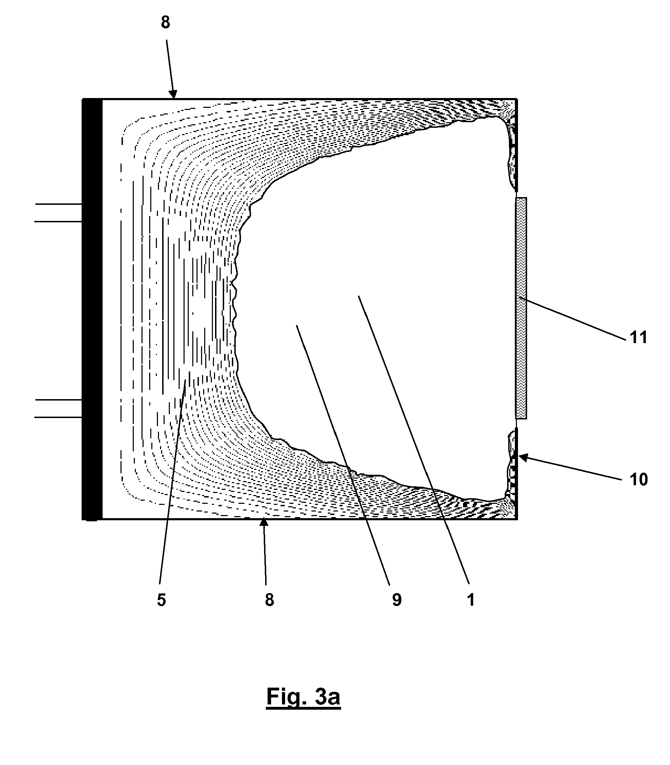

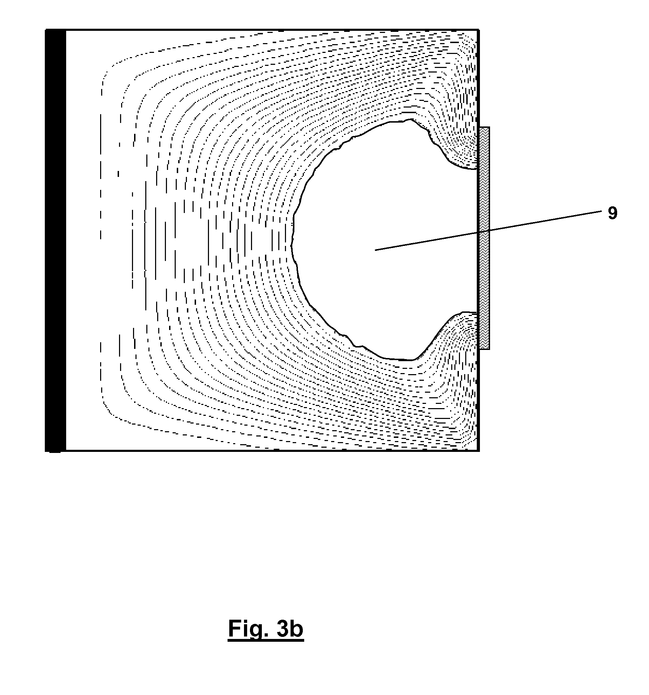

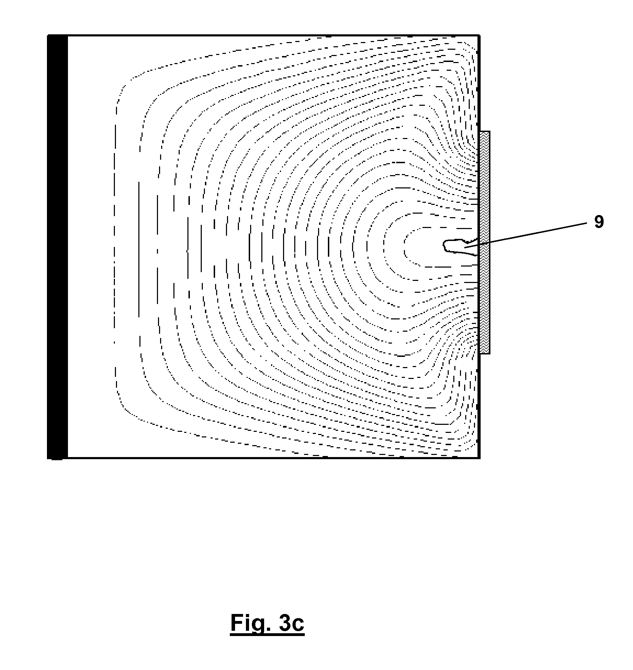

- **Fig. 3**: zeigt das Injizieren von Matrixharz in die Formkavität gemäß den Fig. 1 und 2 in drei verschiedenen Stadien, wobei hier das Formwerkzeug in einem Kantenbereich auf einer niedrigeren Temperatur gehalten wird, der einem in die Formkavität einmündenden Injektionskanal über die Formkavität hinweg gegenüberliegt.

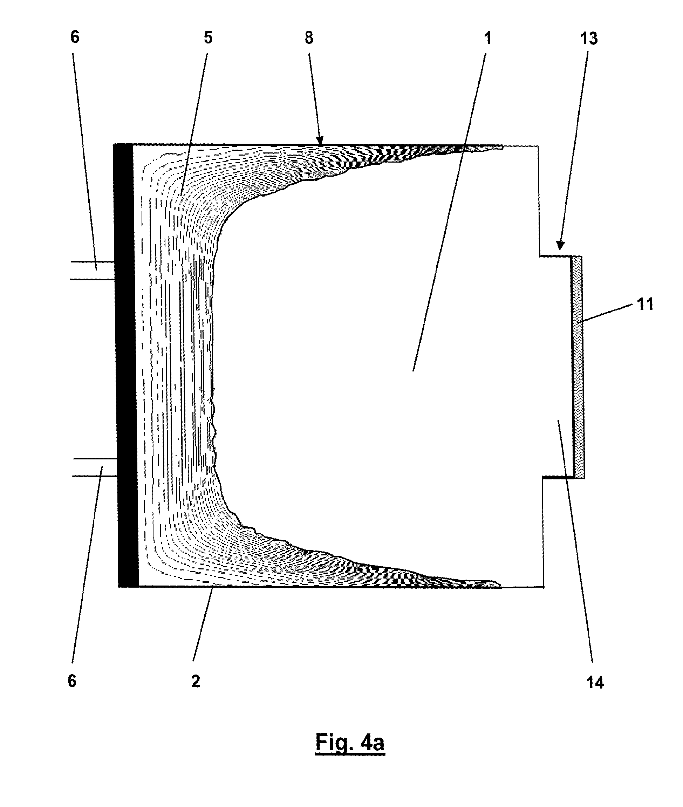

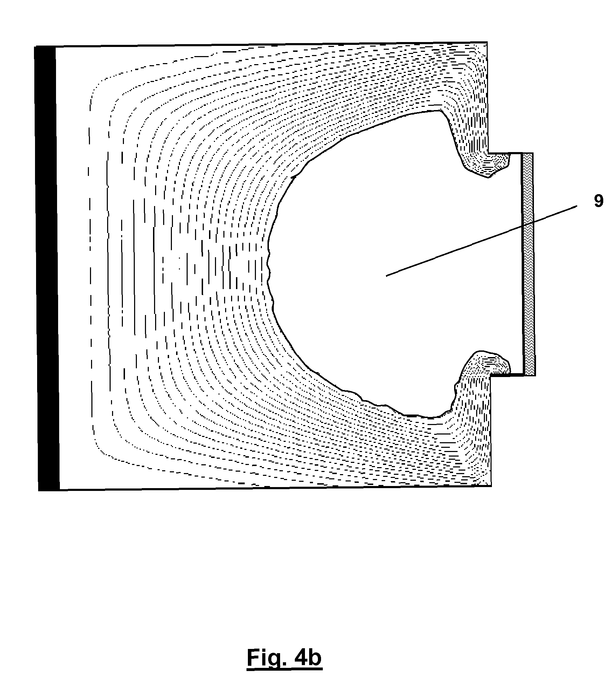

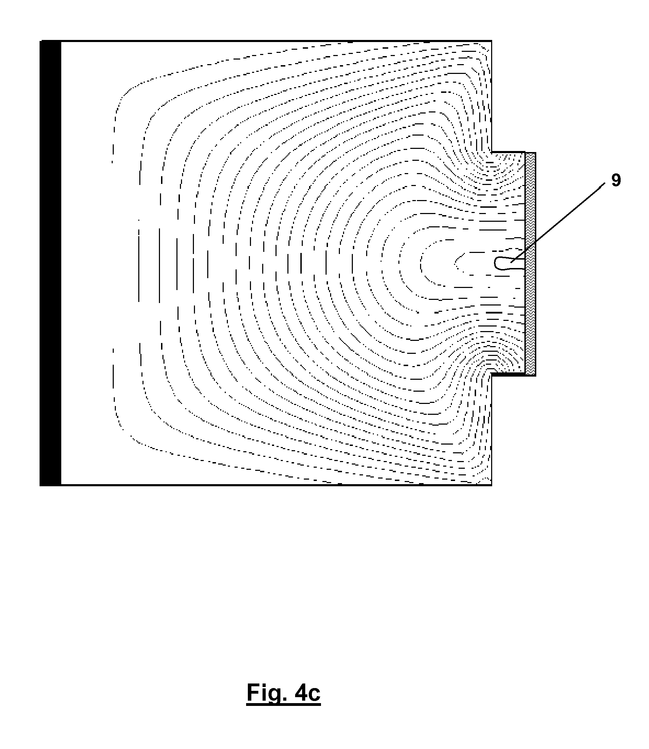

- **Fig.4**: zeigt das Injizieren von Matrixharz in eine Formkavität, die zusätzlich zu der Formkavität gemäß den Fig. 1 bis 3 einen Spülbereich aufweist, in dem hier die Temperiermittel zum Kühlen des Formwerkzeugs vorgesehen sind. Dargestellt sind drei verschiedene Stadien der Injektion.

### FIGURENBESCHREIBUNG

Allen hier beschriebenen Beispielen der vorliegenden Erfindung liegt eine plattenförmige Formkavität 1 in einem Formwerkzeug 2 zugrunde, die durch zwei Hauptflächen 3 und Schmalflächen 4 begrenzt ist. In der Formkavität 1 ist eine hier nicht näher dargestellte Faservorform angeordnet, und die Formkavität 1 ist bereits evakuiert, d. h. der Druck in der Formkavität 1 wurde möglichst weit gegen null abgesenkt. Außerdem ist die Temperatur des Formwerkzeugs 2 bereits erhöht, um beim jetzt beginnenden Injizieren eines Matrixharzes 5 dessen Viskosität möglichst gering zu halten, bis die gesamte Faservorform infiltriert ist. Erst danach soll das duroplastische Matrixharz 5 durch chemische Reaktion aushärten. Injiziert wird das Matrixharz 5 über hier nur angedeutete Injektionskanäle 6, die in einen Kantenbereich 7 der Formkavität 1 einmünden, wobei sie nicht senkrecht in den Kantenbereich einmünden müssen. Längs dieses Kantenbereichs 7 verteilt sich das Matrixharz 5 aufgrund eines dort niedrigeren Strömungswiderstands, bevor die Faservorform im Volumen der Formkavität 1 infiltriert wird. Entsprechend läuft das Matrixharz 5 auch in Kantenbereichen 8, die sich parallel zu der Richtung erstrecken, in welcher das Matrixharz 5 in die Formkavität 1 injiziert wird, vor. Dabei ist mit der Richtung, in welcher in welcher das Matrixharz 5 in die Formkavität 1 injiziert wird, nicht unbedingt die Ausrichtung der Injektionskanäle, sondern die Hauptrichtung des Fortschreitens der Fließfront 12 des Matrixharzes 5 gemeint. Aus dem Voreilen des Matrixharzes in den Kantenbereichen 8 resultiert die in den Fig. 1 b) und c) skizzierte Gefahr, dass Restluft 9 in der Formkavität 1 von dem in einem vierten Kantenbereich 10 aus entgegen gesetzten Richtungen bereits zusammenlaufenden Matrixharz 5 eingeschlossen wird und zu einer Fehlstelle in der Fläche des hergestellten Faserverbundbauteils führt.

Gemäß **Fig. 2** sind in den Kantenbereichen 8 angeordnete Temperiermittel 11 aktiviert, um das Formwerkzeug 2 in den Kantenbereichen 8 zu kühlen. Hierdurch wird die Viskosität des Matrixharzes 5 in den Kantenbereichen 8 selektiv erhöht. Hieraus resultiert die in Fig. 2 b) skizzierte ebene Fließfront 12 des Matrixharzes 5 beim Infiltrieren der Faservorform, die die in Figur 1 skizzierte Gefahr einer Fehlstelle vermeidet.

**Fig. 3** skizziert eine alternative Anordnung der Temperiermittel 11 in dem Kantenbereich 10. Dabei wird in Kauf genommen, dass das Matrixharz 5 längs der Kantenbereiche 8 beim Infiltrieren der Faservorform in der Formkavität 1 vorläuft. Sein Zusammenlaufen in dem Kantenbereich 10 unter Einschluss der Restluft 9 wird jedoch durch Kühlen verhindert, so dass sich keine Fehlstelle in der Fläche des hergestellten Faserverbundbauteils ausbildet.

**Fig. 4** stellt eine Abwandlung des Formwerkzeugs 2 und des Verfahrens dar, die in Fig. 3 skizziert sind. Hier sind die kühlenden Temperiermittel 11 an einem Spülbereich 13 der Formkavität 1 angeordnet, der wie die Formkavität 1 von der Faservorform ausgefüllt wird, aber von dem letztendlichen Faserverbundbauteil abgetrennt wird. Der Spülbereich 13 ist dazu vorgesehen, Restluft und andere Verunreinigungen des Matrixharzes aufzunehmen. Entsprechend ist es wichtig, dass die Restluft 9 auch tatsächlich in diesen Spülbereich 13 vorlaufen kann, wozu ein Zusammenlaufen des Matrixharzes 5 in dem Spülbereich 13 zu verhindern ist. Der Spülbereich 13 kann mit den Temperiermitteln 11 nicht nur an seiner Schmalseite sondern auch über die dortigen Hauptflächen der Formkavität 1 gekühlt sein, wie in Fig. 4C durch eine Schraffur 14 abgedeutet ist.

### BEZUGSZEICHENLISTE

- 1: Formkavität
- 2: Formwerkzeug
- 3: Hauptfläche
- 4: Schmalfläche
- 5: Matrixharz
- 6: Injektionskanal
- 7: Kantenbereich
- 8: Kantenbereich
- 9: Restluft
- 10: Kantenbereich
- 11: Temperiermittel
- 12: Fließfront
- 13: Spülbereich
- 14: Schraffur

## Patentansprüche

1. Verfahren zur Herstellung von Faserverbundbauteilen, wobei eine Faservorform in eine Formkavität eines Formwerkzeugs eingebracht wird, wobei die Formkavität evakuiert wird, wobei das Formwerkzeug aufgeheizt wird und wobei ein Matrixharz in flüssigem Zustand in die evakuierte Formkavität des aufgeheizten Formwerkzeugs injiziert wird, um die Faservorform mit dem Matrixharz zu infiltrieren, **dadurch gekennzeichnet, dass** das Formwerkzeug (2) zumindest für einen Teilzeitraum während des Injizierens des Matrixharzes (5) in mindestens einem Kantenbereich (8, 10) der Formkavität (1) auf einer niedrigeren Temperatur gehalten wird als das restliche Formwerkzeug (2).

2. Verfahren nach Anspruch 1, **dadurch gekennzeichnet, dass** das Matrixharz (5) in einem oder mehreren anderen Kantenbereich(en) (7) in die Formkavität (1) injiziert wird.

3. Verfahren nach Anspruch 1 oder 2, **dadurch gekennzeichnet, dass** das Formwerkzeug (2) in dem mindestens einen Kantenbereich (8, 10) während des Injizierens des Matrixharzes (5) gekühlt wird.

4. Verfahren nach einem der Ansprüche 1 bis 3, **dadurch gekennzeichnet, dass** sich der mindestens eine Kantenbereich (8, 10) über eine Schmalfläche (4) der Formkavität (1) erstreckt.

5. Verfahren nach einem der Ansprüche 1 bis 4, **dadurch gekennzeichnet, dass** das Formwerkzeug (2) in Kantenbereichen (8), die parallel zu einer Richtung verlaufen, in welcher das Matrixharz (5) in die Formkavität (1) injiziert wird, auf einer niedrigeren Temperatur gehalten wird.

6. Verfahren nach einem der Ansprüche 1 bis 4, **dadurch gekennzeichnet, dass** das Formwerkzeug (2) in mindestens einem Kantenbereich (10) auf einer niedrigeren Temperatur gehalten wird, der einem in die Formkavität (1) einmündenden Injektionskanal (6) über die Formkavität (1) hinweg gegenüber liegt.

7. Verfahren nach Anspruch 6, **dadurch gekennzeichnet, dass** sich der mindestens eine Kantenbereich (10) in einem Spülbereich (13) der Formkavität (1), dessen Anteil von den fertigen Faserverbundbauteilen entfernt wird, bis über die Hauptflächen (3) der Formkavität (1) erstreckt.

8. Verfahren nach einem der Ansprüche 1 bis 7, **dadurch gekennzeichnet, dass** ein Verlauf einer Fließfront (12) des Matrixharzes (5) erfasst wird.

9. Verfahren nach Anspruch 8, **dadurch gekennzeichnet, dass** das Kühlen in dem mindestens einen Kantenbereich (8, 10) in Abhängigkeit von dem Verlauf der Fließfront (12) des Matrixharzes (5) variiert wird.

10. Formwerkzeug für die Herstellung von Faserverbundbauteilen mit einer von dem Formwerkzeug definierten, eine Faservorformen aufnehmende Formkavität, mit mindestens einem in die Formkavität einmündenden Evakuierungskanal, mit mindestens einem in die Formkavität einmündenden Injektionskanal, zum Injizieren eines Matrixharzes in flüssigem Zustand in die evakuierte Formkavität des aufgeheizten Formwerkzeugs, um die Faservorform mit dem Matrixharz zu infiltrieren, **dadurch gekennzeichnet, dass** Temperiermittel (11) vorgesehen sind, die das Formwerkzeug (2) zumindest für einen Teilzeitraum während des Injizierens des Matrixharzes (5) in mindestens einem Kantenbereich (8, 10) der Formkavität (1) auf einer niedrigeren Temperatur halten als das restliche Formwerkzeug (2), wobei der mindestens eine Injektionskanal (6) in einem anderen Kantenbereich (7) als dem mindestens einen Kantenbereich (8, 10), in dem die Temperiermittel (11) das Formwerkzeug (2) auf der niedrigeren Temperatur halten, in die Formkavität (1) einmündet.

11. Formwerkzeug nach Anspruch 10, **dadurch gekennzeichnet, dass** die Temperiermittel (11) eine Kühlung für den mindestens einen Kantenbereich (8, 10) aufweisen.

12. Formwerkzeug nach einem der Ansprüche 10 und 11, **dadurch gekennzeichnet, dass** sich der mindestens eine Kantenbereich (8, 10) über eine Schmalfläche (4) der Formkavität erstreckt.

13. Formwerkzeug nach einem der Ansprüche 10 bis 12, **dadurch gekennzeichnet, dass** auf einer niedrigeren Temperatur gehaltene Kantenbereiche (8) parallel zu einer Richtung verlaufen, in welcher das Matrixharz (5) durch die Injektionskanäle (6) in die Formkavität (1) eintritt.

14. Formwerkzeug nach einem der Ansprüche 10 bis 13, **dadurch gekennzeichnet, dass** der mindestens eine auf einer niedrigeren Temperatur gehaltene Kantenbereich (10) den in die Formkavität (1) einmündenden Injektionskanälen (6) über die Formkavität (1) hinweg gegenüber liegt.

15. Formwerkzeug nach einem der Ansprüche 10 bis 14, **dadurch gekennzeichnet, dass** Erfassungsmittel zum Erfassen eines Verlaufs einer Fließfront (12) des Matrixharzes (5) vorgesehen sind.
